# EUROPEAN PATENT SPECIFICATION

(11) **EP 4 401 343 B1**
(45) Date of publication and mention of the grant of the patent: **26.11.2025**
(21) Application number: 21958644.3
(22) Date of filing: 28.09.2021
(51) Int. Cl.: H04W 4/80, H04B 5/77, H04L 69/22, H04L 69/24

(54) **DATA TRANSMISSION METHOD, APPARATUS AND SYSTEM**
DATENÜBERTRAGUNGSVERFAHREN, -VORRICHTUNG UND -SYSTEM
PROCÉDÉ, APPAREIL, ET SYSTÈME DE TRANSMISSION DE DONNÉES

(43) Date of publication of application: 17.07.2024
(73) Proprietor: Huawei Technologies Co., Ltd., Shenzhen, Guangdong 518129 (CN)
(72) Inventor: ZHOU, Xin, Shenzhen, Guangdong 518129 (CN)
(74) Representative: Epping - Hermann - Fischer
(86) International application number: PCT/CN2021/121262
(87) International publication number: WO 2023/050045

(56) References cited:
- CN-A- 102 075 305
- CN-A- 103 326 749
- CN-A- 108 415 512
- US-A1- 2007 263 595
- US-A1- 2021 297 969

## Description

### TECHNICAL FIELD

This application relates to the field of near field communication (near field communication, NFC) technologies, and more specifically, to a data transmission method, apparatus, and system.

### BACKGROUND

An NFC technology is a short-distance wireless connection technology, and can implement, through magnetic field induction, short-distance communication between electronic devices (also referred to as "NFC devices") with an NFC function. The technology is widely applied to fields such as urban public transportation, an access control system, mobile payment, tag information reading and writing, identity identification, and anti-counterfeit identification. The NFC device mainly includes three functional entities: a device host (device host, DH), an NFC controller (NFC controller, NFCC), and an NFC execution environment (NFC execution environment, NFCEE). In the NFC technology, an NFC controller interface (NFC controller interface, NCI) protocol (for example, the NCI protocol version 2. 1) defines a maximum length of a valid payload (also referred to as a payload) supported by an NCI frame (namely, an NCI control frame or an NCI data frame) transmitted between the DH and the NFCC as 255 bytes (Octet), and the maximum length of the valid payload is fixed.

With continuous enrichment and expansion of NFC service scenarios, in many scenarios (for example, a bank application or a bus application), information of a large data volume (for example, a data volume of thousands of bytes) needs to be transmitted between the DH and the NFCC. When information of a large data volume is transmitted based on an NCI frame format specified in the existing NCI protocol, a maximum length of a valid payload of the NCI frame is fixed (that is, 255 bytes), and the maximum length of the valid payload cannot be flexibly adjusted according to an actual transmission requirement.

US 2007/263595 A1 discloses a method for routing data in a chipset comprising at least one host processor and an RFID-type contactless data send/receive interface includes, in response to a command for opening a data path sent by a source point located in the host processor and designating a destination point located in the contactless data send/receive interface, defining a data path linking the source point to the destination point by allocating to the data path a routing channel number and by saving in a routing table the routing channel number and routing parameters comprising at least one identifier of the source point and one identifier of the destination point, and sending to the destination point data supplied by the source point by encapsulating the data in a frame having a header field comprising the routing channel number.

CN 108415512 A discloses a wearable equipment with a near-field communication function and a near-field communication control system. The wearable equipment comprises a communication module, a processor and a near-field communication controller, wherein the communication module is in wireless connection with an electronic terminal, and is in data transmission with the electronic terminal through a predetermined tunnel via the built wireless connection, the processor sends data received by the communication module through the predetermined tunnel to the near-field communication controller, and the near-field communication controller executes the corresponding operation based on data. The document further discloses an NCI packet with a packet header and a payload.

### SUMMARY

This application provides a data transmission method, apparatus, and system. According to the method, a length of a payload field of an NCI frame can be flexibly adjusted. The invention is set out by the appended claims. In the following, parts of the description and drawings referring to embodiments which are not covered by the claims are not presented as embodiments of the invention, but as examples useful for understanding the invention.

According to a first aspect, a data transmission method is provided, including: A first device generates a target near field communication control interface NCI frame, where the target NCI frame includes a frame header and a payload field, the frame header includes a first field and a second field, the first field indicates a quantity of bytes in the second field, and the second field indicates a length of the payload field. The first device sends the target NCI frame to a second device.

The second field indicates a length of the payload field, and the length of the payload field may be understood as a maximum length of the payload field.

In the foregoing technical solution, the first field indicates the quantity of bytes in the second field, and the second field indicates the length of the payload field. According to the method, the length of the payload field of the NCI frame can be flexibly adjusted. When the first field indicates that the quantity of bytes in the second field is greater than 1 byte, the second field indicates that the maximum length of the payload field is greater than 255 bytes. Based on this, when the first device uses the target NCI frame to transmit information of a large data volume (for example, a data volume of thousands of bytes), bandwidth overheads are reduced and transmission efficiency is improved.

In a possible design, the first field includes Q reserved bits, and a value of any one or more of the Q reserved bits indicates a length of the second field, where Q is a positive integer.

In the foregoing technical solution, a length of the first field is indicated by the Q reserved bits included in the target NCI frame, and an implementation process is relatively simple and flexible.

In another possible design, Q is equal to 2, the target NCI frame is an NCI control frame, and the Q reserved bits are a b0 bit and a b1 bit in the 2^{nd} byte in the frame header.

In the foregoing technical solution, the length of the first field is indicated by one or more reserved bits included in the NCI control frame, and an implementation process is relatively simple and flexible.

In another possible design, Q is equal to 6, the target NCI frame is an NCI data frame, and the Q reserved bits are the following bits in the 2^{nd} byte in the frame header: a b0 bit, a b1 bit, a b2 bit, a b3 bit, a b4 bit, and a b5 bit.

In the foregoing technical solution, the length of the first field is indicated by one or more reserved bits included in the NCI data frame, and an implementation process is relatively simple and flexible.

In another possible design, before the first device generates the target near field communication control interface NCI frame, the method further includes: The first device sends a first message to the second device. The first message indicates that the first device has a first capability, and the first capability indicates that a length of a maximum payload length field of an NCI frame supported by the first device is P bytes, where P is a positive integer. The first device receives a second message sent by the second device. The second message indicates that the second device has a second capability, and the second capability indicates that a length of a maximum payload length field of an NCI frame supported by the second device is L bytes, where L is a positive integer, and L is greater than or equal to P. That the first device generates the target near field communication control interface NCI frame includes: The first device generates the target NCI frame based on the first capability.

That a length of the maximum payload length field of an NCI frame supported by the first device is P bytes may be understood as that the first device supports generation, transmission, and parsing of the NCI frame. When P is a positive integer greater than 1, a maximum length of the payload field of the NCI frame supported by the first device is (2^{8×P} -1) bytes, and the (2^{8×P} -1) bytes are greater than 255 bytes. That is, in this case, the first device supports an extended NCI frame. When P is 1, the maximum length of the payload field of the NCI frame supported by the first device is 255 bytes. That is, in this case, the first device supports a non-extended NCI frame (that is, an NCI frame specified in an existing NCI protocol). That a length of a maximum payload length field of an NCI frame supported by the second device is L bytes may be understood as that the first device supports generation, transmission, and parsing of the NCI frame. When L is a positive integer greater than 1, a maximum length of the payload field of the NCI frame supported by the first device is (2^{8×L} -1) bytes, and the (2^{8×L} -1) bytes are greater than 255 bytes. That is, in this case, the first device supports the extended NCI frame. When L is 1, the maximum length of the payload field of the NCI frame supported by the first device is 255 bytes. That is, in this case, the first device supports the non-extended NCI frame (that is, the NCI frame specified in the existing NCI protocol).

In another possible design, the first message includes a second field. The second field includes a first byte used as a reserved byte and a second byte used as a reserved byte, and a value of any one or more bits included in the first byte indicates that the first device has the first capability; or a value of any one or more bits included in the second byte indicates that the first device has the first capability, or a value of a combination of any N bits included in the first byte and any M bits included in the second byte indicates that the first device has the first capability, where N and M are integers, 1 ≤ N ≤ 8 , and 1 ≤ M ≤ 8 .

In the foregoing technical solution, that the first device has the first capability is indicated by values or one or more reserved bits in the reserved byte in the second field included in the first message. An implementation process is relatively simple and flexible.

In another possible design, the second field is a feature enable Feature Enable field.

In another possible design, the second message includes a third field. The third field includes a fourth byte having three reserved bits, a fifth byte having two reserved bits, a sixth byte having four reserved bits, and a seventh byte having eight reserved bits. A value of any one or more bits in any one of the following bytes, or a value of any plurality of bits in any plurality of the following bytes indicates that the second device has the second capability: the fourth byte, the fifth byte, the sixth byte, or the seventh byte.

In the foregoing technical solution, that the second device has the second capability is indicated by a value of one or more reserved bits in a byte (that is, the third byte) in the third field included in the second message. An implementation process is relatively simple and flexible.

In another possible design, the third field is a near field communication control feature NFCC Feature field.

In another possible design, the target NCI frame is the NCI control frame, the second message includes a maximum payload length field of a control frame having a first length, the first length is the L bytes, and a length of the second field is not greater than the L bytes.

In the foregoing technical solution, the length of the maximum payload length field of the control frame having the first length and supported by the second device may be directly carried in the second message. An implementation process is relatively simple, and this helps reduce bandwidth overheads and improve transmission efficiency.

In another possible design, the target NCI frame is an NCI data frame, the second message includes a maximum payload length field of a static host controller interface HCI pipe data frame having a second length, the second length is the L bytes, and a length of the second field is not greater than the L bytes.

In the foregoing technical solution, the length of the maximum payload length field of the HCI pipe data frame having the second length and supported by the second device may be directly carried in the second message. An implementation process is relatively simple, and this helps reduce bandwidth overheads and improve transmission efficiency.

In another possible design, after the first device receives the second message sent by the second device, the method further includes: The first device receives a third message sent by the second device. The third message includes a fourth field, the fourth field indicates that the length of the maximum payload length field of the NCI data frame supported by the second device is the L bytes, and the length of the second field is not greater than the L bytes.

In the foregoing technical solution, the length of the maximum payload length field of the NCI data frame supported by the second device may be carried in the third message.

In another possible design, the third message is a radio frequency RF interface activated message RF_INTF_ACTIVATED_NTF, and the fourth field specifically indicates that a length of a maximum payload length field of a static RF pipe data frame supported by the second device is the L bytes.

In another possible design, the third message is an NCI core pipe creation response message CORE_CONN_CREATE_RSP, and the fourth field specifically indicates that a length of a maximum payload length field of a dynamic pipe data frame supported by the second device is the L bytes.

In another possible design, the method further includes: The first device sends a fifth message to the second device in response to receiving the second message. The fifth message includes a first tag identifier TAG ID, and the first TAG ID is used for requesting to obtain the length of a maximum payload length field of the NCI data frame supported by the second device, or the first TAG ID is used for requesting to obtain the length of the maximum payload length field of the NCI control frame supported by the second device. The first device receives a sixth message sent by the second device. The sixth message includes a first value, the first value indicates that the length of the maximum payload length field of the NCI data frame supported by the second device is the L bytes, or the first value indicates that the length of the maximum payload length field of the NCI control frame supported by the second device is the L bytes, and the length of the second field is not greater than the L bytes.

In the foregoing technical solution, after receiving the second message, the first device may actively send a request to the second device based on a service requirement by using the first TAD ID carried in the fifth message, to obtain the length of the maximum payload length field of the NCI data frame and/or the NCI control frame supported by the second device.

In another possible design, after the first device receives the second message sent by the second device, the method further includes: In response to receiving a fourth message, the first device sends the fifth message to the second device. The fifth message includes a second TAG ID, and the second TAG ID is used for requesting to obtain the length of the maximum payload length field of the NCI data frame supported by the second device. The first device receives a sixth message sent by the second device. The sixth message includes a second value, the second value indicates that the length of the maximum payload length field of the NCI data frame supported by the second device is the L bytes, and the length of the second field is not greater than the L bytes.

In the foregoing technical solution, after receiving the fourth message, the first device may actively send a request to the second device based on a service requirement by using the second TAD ID carried in the fifth message, to obtain the maximum payload length field of the NCI data frame supported by the second device.

In another possible design, the fourth message is an RF interface activated notification message RF_INTF_ACTIVATED_NTF, and the first value specifically indicates that the length of the maximum payload length field of the static RF pipe data frame supported by the second device is the L bytes.

In another possible design, the fourth message is a core pipe creation response message CORE_CONN_CREAT_RSP, the second TAG ID is specifically used for requesting to obtain the maximum payload length field of the dynamic pipe data frame supported by the second device. The second value specifically indicates that the length of the maximum payload length field of the dynamic pipe data frame supported by the second device is the L bytes.

In another possible design, the fifth message is an NCI core obtaining configuration command CORE_GET_CONFIG_CMD, and the sixth message is an NCI core obtaining configuration response CORE_GET_CONFIG_RSP.

In another possible design, the fifth message and the sixth message are vendor-defined messages, and the fourth message is an RF interface activated notification message RF_INTF_ACTIVATED_NTF or a core pipe creation response message CORE_CONN_CREAT_RSP.

In another possible design, the fifth message further includes a third TAG ID. The third TAG ID is used for requesting to obtain the length of the maximum payload length field of the NCI control frame supported by the second device. The sixth message further includes a third value, and the third value indicates that the length of the maximum payload length field of the NCI control frame supported by the second device is the L bytes.

In the foregoing technical solution, when the fifth message and the sixth message are vendor-defined messages, the fifth message may include both the third TAG ID and the second TAG ID. The first device may request, through one fifth message, to obtain the length of the maximum payload length field of the NCI control frame supported by the second device and the length of the maximum payload length field of the NCI data frame supported by the second device, thereby helping reduce overheads.

In another possible design, the first message is an NCI core initialization command message CORE_INIT_CMD, and the second message is an NCI core initialization response message CORE_INIT_RSP.

According to a second aspect, a data transmission method is provided, including: A second device receives a target near field communication control interface NCI frame sent by a first device. The second device parses the target NCI frame to determine that the target NCI frame includes a frame header and a payload field. The frame header includes a first field and a second field, the first field indicates a quantity of bytes in the second field, and the second field indicates a length of the payload field. The second device obtains a valid payload from the payload field based on the second field.

In the foregoing technical solution, the second device may flexibly determine the quantity of bytes of the second field of the target NCI frame based on the first field in the target NCI, and may flexibly determine a maximum length of the payload field based on the quantity of bytes of the second field. Then, the second device determines, based on the quantity of bytes in the second field, an NCI protocol needs to be determined based on which the payload field is parsed, to obtain the valid payload carried in the payload field. Based on this, when the first device needs to transmit information about a large volume of data to the second device, bandwidth overheads are reduced and transmission efficiency is improved.

In a possible design, before the second device receives the target near field communication control interface NCI frame sent by the first device, the method further includes: The second device receives a first message sent by the first device. The first message indicates that the first device has a first capability, and the first capability indicates that a maximum payload length field of an NCI frame supported by the first device is P bytes, where P is a positive integer. The second device sends a second message to the first device. The second message indicates that the second device has a second capability, and the second capability indicates that a length of a maximum payload length field of an NCI frame supported by the second device is L bytes, where L is a positive integer, and L is greater than or equal to P.

It should be understood that content that is not described in detail in the second aspect is the same as the related description in the first aspect. For details, refer to the related description in the first aspect.

According to a third aspect, a first data transmission apparatus is provided, including: a processing unit, configured to generate a target near field communication control interface NCI frame, where the target NCI frame includes a frame header and a payload field, the frame header includes a first field and a second field, the first field indicates a quantity of bytes in the second field, and the second field indicates a length of the payload field; and a transceiver unit, configured to send the target NCI frame to the second device.

In a possible design, the first field includes Q reserved bits, and a value of any one or more of the Q reserved bits indicates a length of the second field, where Q is a positive integer.

In another possible design, Q is equal to 2, the target NCI frame is an NCI control frame, and the Q reserved bits are a b0 bit and a b1 bit in the 2^{nd} byte in the frame header.

In another possible design, Q is equal to 6, the target NCI frame is an NCI data frame, and the Q reserved bits are the following bits in the 2^{nd} byte in the frame header: a b0 bit, a b1 bit, a b2 bit, a b3 bit, a b4 bit, and a b5 bit.

In another possible design, the transceiver unit is further configured to send a first message to the second device, where the first message indicates that the first device has a first capability, the first capability indicates that a length of a maximum payload length field of an NCI frame supported by the first device is P bytes, where P is a positive integer; receive a second message sent by the second device, where the second message indicates that the second device has a second capability, the second capability indicates that a length of a maximum payload length field of an NCI frame supported by the second device is L bytes, where L is a positive integer, and L is greater than or equal to P; and the processing unit is further configured to generate the target NCI frame based on the first capability.

In another possible design, the first message includes a second field. The second field includes a first byte used as a reserved byte and a second byte used as a reserved byte, and a value of any one or more bits included in the first byte indicates that the first device has the first capability; or a value of any one or more bits included in the second byte indicates that the first device has the first capability; or a value of a combination of any N bits included in the first byte and any M bits included in the second byte indicates that the first device has the first capability, where N and M are integers, 1 ≤ N ≤ 8 , and 1 ≤ M ≤ 8 .

In another possible design, the second field is a feature enable Feature Enable field.

In another possible design, the second message includes a third field. The third field includes a fourth byte having three reserved bits, a fifth byte having two reserved bits, a sixth byte having four reserved bits, and a seventh byte having eight reserved bits. A value of any one or more bits in any one of the following bytes, or a value of any plurality of bits in any plurality of the following bytes indicates that the second device has the second capability: the fourth byte, the fifth byte, the sixth byte, or the seventh byte.

In another possible design, the third field is a near field communication control feature NFCC Feature field.

In another possible design, the target NCI frame is the NCI control frame, the second message includes a maximum payload length field of a control frame having a first length, the first length is the L bytes, and a length of the second field is not greater than the L bytes.

In another possible design, the target NCI frame is an NCI data frame, the second message includes a maximum payload length field of a static host controller interface HCI pipe data frame having a third length, the second length is the L bytes, and the length of the second field is not greater than the L bytes.

In another possible design, the transceiver unit is further configured to receive a third message sent by the second device. The third message includes a fourth field, the fourth field indicates that a length of a maximum payload length field of the NCI data frame supported by the second device is the L bytes, and the length of the second field is not greater than the L bytes.

In another possible design, the third message is a radio frequency RF interface activated message RF_INTF_ACTIVATED_NTF, and the fourth field specifically indicates that a length of a maximum payload length field of a static RF pipe data frame supported by the second device is the L bytes.

In another possible design, the third message is an NCI core pipe creation response message CORE_CONN_CREATE_RSP, and the fourth field specifically indicates that a length of a maximum payload length field of a dynamic pipe data frame supported by the second device is the L bytes.

In another possible design, the transceiver unit is further configured to send a fifth message to the second device in response to receiving the second message, where the fifth message includes a first tag identifier TAG ID, and the first TAG ID is used for requesting to obtain a length of a maximum payload length field of an NCI data frame supported by the second device, or the first TAG ID is used for requesting to obtain a length of a maximum payload length field of an NCI control frame supported by the second device, receive a sixth message sent by the second device, where the sixth message includes a first value, the first value indicates that the length of the maximum payload length field of the NCI data frame supported by the second device is the L bytes, or the first value indicates that the length of a maximum payload length field of the NCI control frame supported by the second device is the L bytes, and the length of the second field is not greater than the L bytes.

In another possible design, the transceiver unit is further configured to send the fifth message to the second device in response to receiving the fourth message, where the fifth message includes a second TAG ID, and the second TAG ID is used for requesting to obtain the length of the maximum payload length field of the NCI data frame supported by the second device; receive the sixth message sent by the second device, where the sixth message includes a second value, the second value indicates that the length of a maximum payload length field of the NCI data frame supported by the second device is the L bytes, and the length of the second field is not greater than the L bytes.

In another possible design, the fourth message is an RF interface activated notification message RF_INTF_ACTIVATED_NTF, and the first value specifically indicates that the length of the maximum payload length field of the static RF pipe data frame supported by the second device is the L bytes.

In another possible design, the fourth message is a core pipe creation response message CORE_CONN_CREAT_RSP, the second TAG ID is specifically used for requesting to obtain the maximum payload length field of the dynamic pipe data frame supported by the second device. The second value specifically indicates that the length of the maximum payload length field of the dynamic pipe data frame supported by the second device is the L bytes.

In another possible design, the fifth message is an NCI core obtaining configuration command CORE_GET_CONFIG_CMD, and the sixth message is an NCI core obtaining configuration response CORE_GET_CONFIG_RSP.

In another possible design, the fifth message and the sixth message are vendor-defined messages, and
the fourth message is an RF interface activated notification message RF_INTF_ACTIVATED_NTF or a core pipe creation response message CORE_CONN_CREAT_RSP.

In another possible design, the fifth message further includes a third TAG ID. The third TAG ID is used for requesting to obtain the length of the maximum payload length field of the NCI control frame supported by the second device. The sixth message further includes a third value, and the third value indicates that the length of the maximum payload length field of the NCI control frame supported by the second device is the L bytes.

In another possible design, the first message is an NCI core initialization command message CORE_INIT_CMD, and the second message is an NCI core initialization response message CORE_INIT_RSP.

The first data transmission apparatus may be, but is not limited to, a chip, a smartphone, or a terminal (for example, a computer).

According to a fourth aspect, a second data transmission apparatus is provided, including: a transceiver unit, configured to receive a target near field communication control interface NCI frame sent by a first device; and a processing unit, configured to parse the target NCI frame to determine that the target NCI frame includes a frame header and a payload field, where the frame header includes a first field and a second field, the first field indicates a quantity of bytes in the second field, and the second field indicates a length of the payload field. The processing unit is further configured to obtain a valid payload from the payload field based on the second field.

In a possible design, the transceiver unit is further configured to receive a first message sent by the first device, where the first message indicates that the first device has a first capability, the first capability indicates that a maximum payload length field of an NCI frame supported by the first device is P bytes, where P is a positive integer; send a second message to the first device, where the second message indicates that the second device has a second capability, the second capability indicates that a length of a maximum payload length field of an NCI frame supported by the second device is L bytes, where L is a positive integer, and L is greater than or equal to P.

The second data transmission apparatus may be, but is not limited to, a chip, a smartphone, or a terminal (for example, a computer).

It should be understood that content that is not described in detail in the fourth aspect is the same as the related description in the third aspect. For details, refer to the related description in the third aspect.

According to a fifth aspect, a first data transmission device is provided, and the first data transmission device has a function of implementing the first data transmission apparatus described in the third aspect. The function may be implemented based on hardware, or may be implemented based on hardware executing corresponding software. The hardware or the software includes one or more modules corresponding to the function.

In a possible design, a structure of the first data transmission device includes a processor. The processor is configured to support the first data transmission device in performing a corresponding function in the foregoing method.

The first data transmission device may further include a memory. The memory is configured to be coupled to the processor, and stores program instructions and data that are necessary for the first data transmission device.

In another possible design, the first data transmission device includes a processor, a transmitter, a receiver, a random access memory, a read-only memory, and a bus. The processor is coupled to the transmitter, the receiver, the random access memory, and the read-only memory through the bus. When the first data transmission device needs to run, a basic input/output system built into the read-only memory or a bootloader in an embedded system is used to boot a system to start, and boot the first data transmission device to enter a normal running state. After entering the normal running state, the first data transmission device executes an application program and an operating system in the random access memory, so that the processor performs the method according to the first aspect or any possible implementation of the first aspect.

According to a sixth aspect, a second data transmission device is provided. The second data transmission device has a function of implementing the second data transmission apparatus described in the fourth aspect. The function may be implemented based on hardware, or may be implemented based on hardware executing corresponding software. The hardware or the software includes one or more modules corresponding to the function.

In a possible design, a structure of the second data transmission device includes a processor. The processor is configured to support the second data transmission device in performing a corresponding function in the foregoing method.

The second data transmission device may further include a memory. The memory is configured to be coupled to the processor, and stores program instructions and data that are necessary for the second data transmission device.

In another possible design, the second data transmission device includes a processor, a transmitter, a receiver, a random access memory, a read-only memory, and a bus. The processor is coupled to the transmitter, the receiver, the random access memory, and the read-only memory through the bus. When the second data transmission device needs to run, a basic input/output system built into the read-only memory or a bootloader in an embedded system is used to boot a system to start, and boot the second data transmission device to enter a normal running state. After entering the normal running state, the second data transmission device executes an application program and an operating system in the random access memory, so that the processor performs the method in the second aspect or any possible implementation of the second aspect.

According to a seventh aspect, a computer program product is provided. The computer program product includes computer program code. When the computer program code is run on a computer, the computer is enabled to perform the method according to the first aspect or any possible implementation of the first aspect.

According to an eighth aspect, a computer program product is provided, and the computer program product includes computer program code. When the computer program code is run on a computer, the computer is enabled to perform the method according to the second aspect or any possible implementation of the second aspect.

According to a ninth aspect, a computer-readable medium is provided. The computer-readable medium stores program code, and when the computer program code is run on a computer, the computer is enabled to perform the method according to the first aspect or any possible implementation of the first aspect. The computer-readable storage includes, but is not limited to, one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a tenth aspect, a computer-readable medium is provided. The computer-readable medium stores program code, and when the computer program code is run on a computer, the computer is enabled to perform the method according to the second aspect or any possible implementation of the second aspect. The computer-readable storage includes, but is not limited to, one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to an eleventh aspect, a chip system is provided. The chip system includes a processor and a data interface. The processor reads, through the data interface, instructions stored in a memory, to perform the method in the first aspect or any possible implementation of the first aspect. In a specific implementation process, the chip system may be implemented in a form of a central processing unit (central processing unit, CPU), a micro controller (micro controller unit, MCU), a micro processing unit (micro processing unit, MPU), a digital signal processor (digital signal processing, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a twelfth aspect, a chip system is provided. The chip system includes a processor and a data interface. The processor reads, through the data interface, instructions stored in a memory, to perform the method in the second aspect or any possible implementation of the second aspect. In a specific implementation process, the chip system may be implemented in a form of a central processing unit (central processing unit, CPU), a micro controller (micro controller unit, MCU), a micro processing unit (micro processing unit, MPU), a digital signal processor (digital signal processing, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a thirteenth aspect, a data transmission system is provided. The system includes the first data transmission apparatus according to the third aspect and the second data transmission apparatus according to the fourth aspect.

According to a fourteenth aspect, a smartphone is provided, and the smartphone includes the data transmission system according to the thirteenth aspect.

### BRIEF DESCRIPTION OF DRAWINGS

FIG. 1 is a schematic flowchart of a data transmission method 100 according to an embodiment of this application;
FIG. 2 is a schematic diagram of a format of a target NCI frame according to an embodiment of this application;
FIG. 3 is a schematic diagram of a format of another target NCI frame according to an embodiment of this application;
FIG. 4 is a schematic diagram of interaction of a data transmission method according to an embodiment of this application;
FIG. 5 is a schematic diagram of interaction of another data transmission method according to an embodiment of this application;
FIG. 6 is a schematic diagram of interaction of still another data transmission method according to an embodiment of this application;
FIG. 7 is a schematic diagram of interaction of still another data transmission method according to an embodiment of this application;
FIG. 8 is a schematic diagram of a structure of a first data transmission apparatus 800 according to an embodiment of this application;
FIG. 9 is a schematic diagram of a structure of a second data transmission apparatus 900 according to an embodiment of this application;
FIG. 10 is a schematic diagram of a hardware structure of a data transmission apparatus 1000 according to an embodiment of this application; and
FIG. 11 is a schematic diagram of a structure of a data transmission system 1100 according to an embodiment of this application.

### DESCRIPTION OF EMBODIMENTS

The following describes technical solutions of this application with reference to the accompanying drawings.

Terms used in embodiments of this application are only used to explain specific embodiments of this application, but are not intended to limit this application.

In embodiments of this application, terms such as "first", "second", and "third" are used to distinguish between same items or similar items with basically same descriptions and functions. There is no logical or time sequence dependency between "first", "second", and "third", and a quantity and an execution sequence are not limited.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "for example" and "such as" are used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "comprise", "include", "have", and their variants all mean "include but are not limited to", unless otherwise specifically emphasized in another manner.

In this application, "at least one" means one or more, and "a plurality of" means two or more. A term "and/or" describes an association relationship for describing associated objects and represents that three relationships may exist. For example, A and/or B may represent the following three cases: Only A exists, both A and B exist, and only B exists. A and B each may be singular or plural. A character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In this application, a DH and an NFCC that are used are terms used in the NCI protocol formulated by the NFC Forum (NFC Forum). The DH is configured to be responsible for management of the entire NFC device, including management of the NFC controller, such as initialization, configuration, or power management. In a smartphone, the DH may correspond to a CPU of a mobile phone. The DH may correspond to a terminal host (terminal host) in a host controller interface (host controller interface, HCI) specification formulated by the European Telecommunication Standards Institute (European Telecommunication Standards Institute, ETSI). In addition, if a management entity (managing entity, ME) in a specification formulated by the Global Platform (global platform, GP) is implemented on a terminal host, in this case, the DH may also be referred to as a management host (managing host, MH). An NFCC is an entity of an NFC chip and is responsible for data transmission, and is usually directly used to represent the NFC chip. The NFCC may correspond to a contactless front end (Contactless Front-end, CLF) in the HCI specification formulated by the ETSI. In this case, a host controller (host controller) in the HCI needs to be implemented on the NFCC.

In this application, both a "valid payload" included in one frame and a "payload" included in one frame are used for carrying data information transmitted in the frame. The valid payload and payload have the same meaning, and a maximum valid payload and a maximum payload have the same meaning. In this application, an NCI control frame whose length of a payload field is greater than 255 bytes is referred to as an extended NCI control frame, and an NCI control frame whose length of a maximum payload length field is greater than 1 byte is referred to as an extended NCI control frame. An NCI data frame whose length of a payload field is greater than 255 bytes is referred to as an extended NCI data frame, and an NCI data frame whose length of a maximum payload length field is greater than 1 byte is referred to as an extended NCI data frame. It should be understood that the foregoing description (that is, the extended NCI control frame or the extended NCI data frame) is merely an example, and does not constitute any limitation on the solution of this application. For example, in some other implementations, the extended NCI control frame may also be referred to as an NCI control frame. For another example, the extended NCI data frame may also be referred to as an NCI data frame.

Conventional technologies in embodiments of this application are described in detail below.

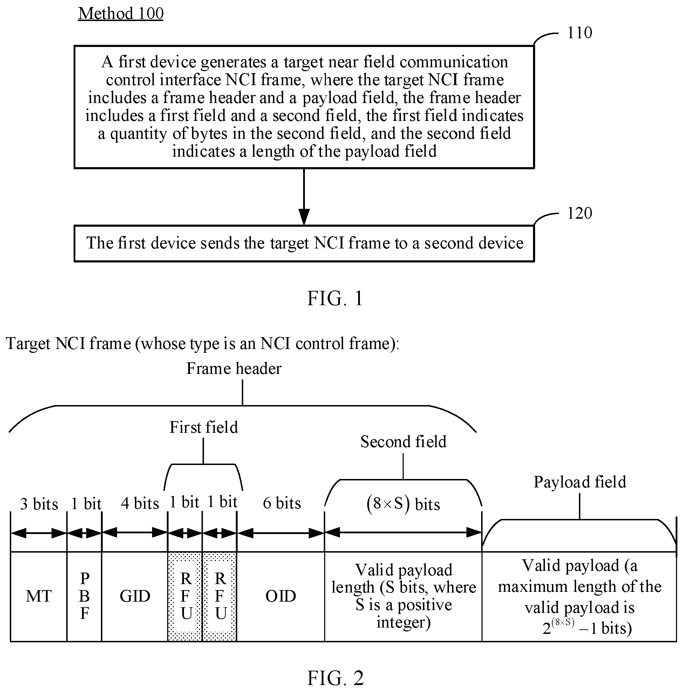

FIG. 1 is a schematic flowchart of a data transmission method 100 according to an embodiment of this application; As shown in FIG. 1, the method 100 includes step 110 and step 120. The following describes step 110 and step 120 in detail.

Step 110: A first device generates a target near field communication control interface NCI frame, where the target NCI frame includes a frame header and a payload field, the frame header includes a first field and a second field, the first field indicates a quantity of bytes in the second field, and the second field indicates a length of the payload field; and the first device sends the target NCI frame to a second device.

The first field indicates a quantity of bytes in the second field, and the second field indicates a length of the payload field. That the second field indicates a length of the payload field may be understood as that the second field indicates a maximum length of the payload field. In other words, a data volume carried in the payload field of the target NCI frame may be less than or equal to the maximum length of the payload field indicated by the second field. In some implementations, when the first field indicates that the quantity of bytes in the second field is S, the second field indicates that the length of the payload field may be (2^{8×S} -1) bytes, where S is a positive integer. It may be understood that the length (that is, (2^{8×S} -1) bytes) of the payload field indicated by the second field is the maximum length of the payload field, and the data volume actually carried in the payload field may be less than or equal to (2^{8×S} -1) bytes. For example, when S is equal to 1, the second field indicates that the length of the payload field may be 255 bytes, and the data volume actually carried in the payload field may be less than or equal to 255 bytes. For another example, when S is equal to 2, the second field indicates that the length of the payload field may be 65535 bytes, and the data volume actually carried in the payload field may be less than or equal to 65535 bytes.

The first field includes Q reserved bits, and a value of any one or more of the Q reserved bits indicates a length of the second field, where Q is a positive integer. A value of Q is not specifically limited. For example, a specific value of Q may be determined based on a type of the target NCI frame.

In some implementations, Q is equal to 2, the target NCI frame is an NCI control frame, and the Q reserved bits are a b0 bit and a b1 bit in the 2^{nd} byte in the frame header. In this implementation, the value of any one or more of Q reserved bits included in the target NCI frame indicates the length of the second field, where Q is equal to 2. For ease of description, in the following, a value of any one of the Q (Q is equal to 2) reserved bits indicates the length of the second field, and is denoted as Manner 1. Values of all reserved bits in the Q (Q is equal to 2) reserved bits indicate the length of the second field, and are denoted as Manner 2. With reference to Table 1, the following describes Manner 1 and Manner 2 by using an example. It should be understood that Table 1 in the following is merely an example and does not constitute any limitation on this application.

**Table 1**

| | | |
|---|---|---|
| Manner 1: | Value of The Reserved Bit | Length of The Second Field |
| A value of one of the two reserved bits indicates a length of a second field | | |
| | 1 | S (S is a positive integer greater than 1) bytes |
| | 0 | 1 byte |
| Manner 2: | Value of The Two Reserved Bits | Length of The Second Field |
| A value of two reserved bits indicates a length of the second field | | |
| | 00 | 1 byte |
| | 01 | 2 bytes |
| | 10 | 3 bytes |
| | 11 | 4 bytes |

In Manner 1 shown in Table 1, for example, a value of one reserved bit is equal to "1" to indicate that the length of the second field is S (S is a positive integer greater than 1) bytes, for example, S may be equal to 2, 3, 4, or 5, and the value of one reserved bit is equal to "0" to indicate that the length of the second field is 1 byte. Optionally, a value of one reserved bit equal to "1" may indicate that the length of the second field is 1 byte, and a value of the one reserved bit equal to "0" may indicate that the length of the second field is S (S is a positive integer greater than 1) bytes.

In Manner 2 shown in Table 1, for example, the value of two reserved bits equal to "00" indicates that the length of the second field is 1 byte, the value of two reserved bits equal to "01" indicates that the length of the second field is 2 bytes, the value of two reserved bits equal to "10" indicates that the length of the second field is 3 bytes, and the value of two reserved bits equal to "11" indicates that the length of the second field is 4 bytes. It should be understood that correspondence between the value of the two reserved bits and the length of the second field described in Manner 2 is merely an example. For example, in Manner 2, the value of two reserved bits equal to "01" may indicate that the length of the second field is equal to 5 bytes, the value of two reserved bits equal to "10" may indicate that the length of the second field is equal to 3 bytes, or the value of two reserved bits equal to "11" may indicate that the length of the second field is equal to 2 bytes.

The following uses an example for description with reference to Table 2. The target NCI frame is an NCI control frame, a value of all reserved bits in the Q (Q is equal to 2) reserved bits indicates the length of the second field, and the length of the second field indicates the length of the payload field. For ease of description, the two reserved bits (that is, the Q reserved bits, where Q is equal to 2) are respectively denoted as a first reserved bit and a second reserved bit.

**Table 2**

| (First Reserved Bit, Second Reserved Bit) | Length of A Second Field | Length Of A Payload Field |
|---|---|---|
| 00 | 1 byte | 255 (that is, 2⁸ -1) bytes |
| 01 | 2 bytes | 65535 (that is, 2^{8×2} -1) bytes |
| 10 | 3 bytes | 16777215 (that is, 2^{8×3} -1) bytes |
| 11 | 4 bytes | 4294967295 (that is, 2^{8×4} -1) bytes |

In Table 2, the type of the target NCI frame is an NCI control frame. When the value of the two reserved bits included in the target NCI frame is equal to "00", the length of the second field is 1 byte, and the length of the payload field of the target NCI frame is 255 bytes. When the value of the two reserved bits included in the target NCI frame is equal to "01", the length of the second field is 2 bytes, and the length of the payload field of the NCI frame is 65535 bytes. When the value of the two reserved bits included in the target NCI frame is equal to "10", the length of the second field is 3 bytes, and the length of the payload field of the target NCI frame is 16777215 bytes. When the value of the two reserved bits included in the target NCI frame is equal to "11", the length of the second field is 4 bytes, and the length of the payload field of the target NCI frame is 4294967295 bytes. It should be noted that the length of the payload field in Table 2 is the maximum length of the payload field of the target NCI frame. In actual application, a quantity of bytes carried in the payload field of the target NCI frame may be less than or equal to the quantity of bytes corresponding to the length of the payload field. It should be understood that Table 2 is merely an example, and does not constitute any limitation on the solution of this application. For example, when the value of the two reserved bits included in the target NCI frame is equal to "01", the length of the second field may alternatively be equal to another value, provided that the value is an integer greater than 1. For example, the length of the second field may alternatively be equal to 3 bytes.

In this embodiment of this application, specific positions of the Q reserved bits (Q is equal to 2, that is, the first reserved bit and the second reserved bit) in the target NCI frame (whose type is an NCI control frame) are not limited. The following uses a format of an NCI control frame specified in the NCI protocol version 2.1 as a reference, and uses an example to describe a format of a target NCI frame (whose type is an NCI control frame) provided in this embodiment of this application with reference to FIG. 2. As shown in FIG. 2, the target NCI frame includes the frame header and the payload field. The frame header occupies 3 bytes, the frame header includes the first field and the second field, and the frame header may further include the following fields: a message type (message type, MT) field, a packet boundary flag (packet boundary flag, PBF) field, a group identifier (group identifier, GID) field, two reserved for future use (reserved for future use, RFU) fields (that is, the first reserved bit and the second reserved bit, and each reserved field occupies one bit), and an opcode identifier (opcode identifier, OID) field. The Q reserved bits (Q is equal to 2) are a b0 bit and a b1 bit in the 2^{nd} byte in the frame header. It may be understood that when S is a positive integer greater than 1, a total length of the target NCI frame shown in FIG. 2 is greater than 258 bytes (258 bytes=3 bytes+255 bytes). It should be understood that FIG. 2 is a schematic diagram of a target NCI frame according to an embodiment of this application by using the format of the NCI control frame specified in the NCI protocol version 2.1 as a reference, and does not constitute any limitation on the format of the target NCI frame provided in this embodiment of this application. Optionally, a format of an NCI control frame specified in another NCI protocol version may alternatively be used as a reference. Based on this, the Q reserved bits (Q is equal to 2) may be located in another byte (for example, the 1^{st} byte, the 3^{rd} byte, or the 4^{th} byte) of a frame header of the target NCI frame or another bit of the 2^{nd} byte (for example, any two inconsecutive bits of the 2^{nd} byte).

In some other implementations, Q is equal to 6, the target NCI frame is an NCI data frame, and the Q reserved bits are the following bits in the 2^{nd} byte in the frame header: a b0 bit, a b1 bit, a b2 bit, a b3 bit, a b4 bit, and a b5 bit. In this implementation, the value of any one or more of Q reserved bits included in the target NCI frame indicates the length of the second field, where Q is equal to 6. A value of any plurality of the six reserved bits indicates the length of the second field, and the any plurality of reserved bits may be two, three, four, five, or six reserved bits. A manner in which the value of any one or more of the Q (Q is equal to 6) reserved bits indicate the length of the second field is not specifically limited. Optionally, when the value of two of the Q (Q is equal to 6) reserved bits indicates the length of the second field, values of the two reserved bits are not both zero. In this case, the length of the second field is greater than 1 byte. Optionally, when the value of the two of the Q (Q is equal to 6) reserved bits indicates the length of the second field, and the value of the two reserved bits is equal to "00", the length of the second field is equal to 1 byte, and the maximum payload length of the target NCI frame is equal to 255 bytes. For example, if the type of the target NCI frame is an NCI data frame, the value of two reserved bits in the Q (Q is equal to 6) reserved bits may indicate the length of the second field, and the two reserved bits may be the 2^{nd} reserved bit and the 3^{rd} reserved bit in the Q reserved bits. Based on this, for a relationship between the value of the two reserved bits, the length of the second field, and the maximum payload length of the target NCI frame, refer to content shown in Table 2. Details are not described herein again.

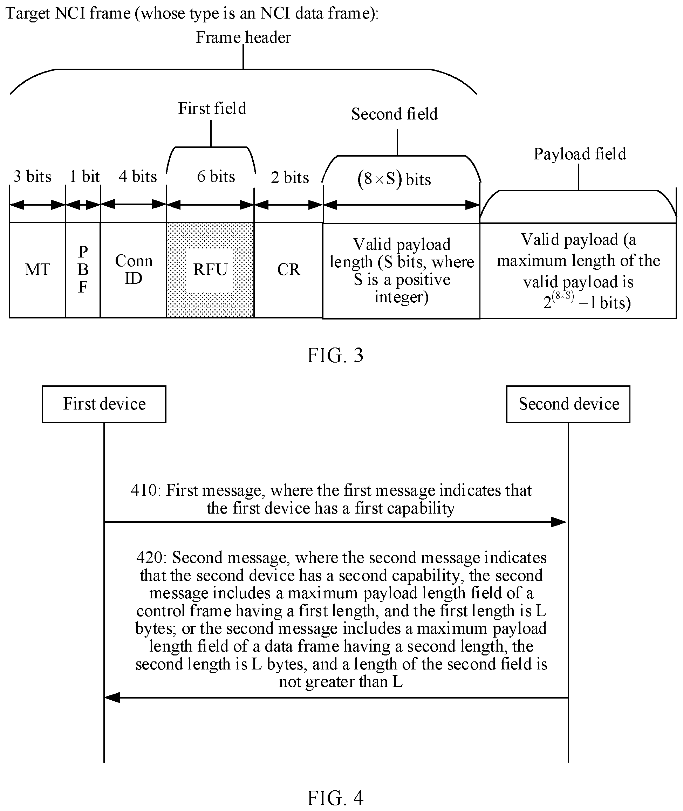

In this embodiment of this application, specific positions of the Q (Q is equal to 6) reserved bits in the target NCI frame (that is, the NCI data frame) are not limited. The following uses a format of an NCI data frame specified in the NCI protocol version 2.1 as a reference, and uses an example to describe a format of a target NCI frame (whose type is an NCI data frame) provided in this embodiment of this application with reference to FIG. 3. As shown in FIG. 3, the target NCI frame includes the frame header and the payload field. The frame header occupies 3 bytes, the frame header includes the first field and the second field, and the frame header may further include the following fields: the MT field, the PBF field, a connection identifier (connection identifier, Conn ID) field, the RFU field (that is, the Q reserved bits, where Q is equal to 6) and a cyclic redundancy (cyclic redundancy, CR) field. The Q reserved bits are the following bits in the 2^{nd} byte in the frame header: the b0 bit, the b1 bit, the b2 bit, the b3 bit, the b4 bit, and the b5 bit. It may be understood that when S is a positive integer greater than 1, a total length of the target NCI frame shown in FIG. 3 is greater than 258 bytes (258 bytes=3 bytes+255 bytes). It should be understood that FIG. 3 is a schematic diagram of a format of a target NCI frame according to an embodiment of this application by using the format of the NCI data frame specified in the NCI protocol version 2.1 as a reference, and does not constitute any limitation on the format of the target NCI frame provided in this embodiment of this application. Optionally, a format of an NCI data frame specified in another NCI protocol version may alternatively be used as a reference. Based on this, the Q reserved bits (Q is equal to 6) may be located in another byte (for example, the 1^{st} byte, the 3^{rd} byte, or the 4^{th} byte) of the frame header of the target NCI frame.

Optionally, before step 110, the first device further needs to establish NFC communication with the second device. A procedure in which the first device establishes the NFC communication with the second device is not specifically limited. The procedure is, for example, but not limited to, the first device and the second device may establish the NFC communication before step 110 according to a procedure of establishing NFC communication specified in an existing NCI protocol.

Optionally, before step 110, the following operations may alternatively be performed. A first message indicates that the first device has a first capability. The first capability indicates that a length of a maximum payload length field of an NCI frame supported by the first device is P bytes, where P is a positive integer. The first device receives a second message sent by the second device. The second message indicates that the second device has a second capability. The second capability indicates that a length of a maximum payload length field of an NCI frame supported by the second device is L bytes, where L is a positive integer, and L is greater than or equal to P. That the first device generates the target near field communication control interface NCI frame includes: The first device generates the target NCI frame based on the first capability. Optionally, in some implementations, the foregoing operation may alternatively be replaced with: The first message indicates that the first device has the first capability. The first capability indicates that the length of the maximum payload length field of the NCI frame supported by the first device is P bytes, where P is a positive integer. The first device receives the second message sent by the second device. The second message indicates that the second device has the second capability. The second capability indicates that the length of the maximum payload length field of the NCI frame supported by the second device is L bytes, where L is a positive integer, and L is less than P. That the first device generates the target near field communication control interface NCI frame includes: The first device generates the target NCI frame based on the second capability.

That a length of a maximum payload length field of an NCI frame supported by the first device is P bytes may be understood as that the first device supports generation, transmission, and parsing of the NCI frame. When P is a positive integer greater than 1, a maximum length of a payload field of an NCI frame supported by the first device is (2^{8×P} -1) bytes, and the (2^{8×P} -1) bytes are greater than 255 bytes, that is, in this case, the first device supports an extended NCI frame. When P is 1, the maximum length of the payload field of the NCI frame supported by the first device is 255 bytes. That is, in this case, the first device supports a non-extended NCI frame (that is, an NCI frame specified in an existing NCI protocol). That a length of a maximum payload length field of an NCI frame supported by the second device is L bytes may be understood as that the first device supports generation, transmission, and parsing of the NCI frame. When L is a positive integer greater than 1, the maximum length of the payload field of the NCI frame supported by the first device is (2^{8×L} -1) bytes, and the (2^{8×L} -1) bytes are greater than 255 bytes, that is, in this case, the first device supports the extended NCI frame. When L is 1, the maximum length of the payload field of the NCI frame supported by the first device is 255 bytes. That is, in this case, the first device supports the non-extended NCI frame (that is, the NCI frame specified in the existing NCI protocol).

It may be understood that, in the solution described above, the first device may be a DH device or a device that has a same function as the DH device, and the second device may be an NFCC device or a device that has a same function as the NFCC device. Optionally, the first device may be the NFCC device or the device that has a same function as the NFCC device, and the second device may be the DH device or the device that has a same function as the DH device. Optionally, when the first device is the DH device or the device having a same function as the DH device, and the second device is the NFCC device or the device having a same function as the NFCC device, the following solutions may further be included.

The first message includes the second field, the second field includes a first byte used as a reserved byte and a second byte used as a reserved byte, and a value of any one or more bits included in the first byte indicates that the first device has the first capability; or a value of any one or more bits included in the second byte indicates that the first device has the first capability; or a value of a combination of any N bits included in the first byte and any M bits included in the second byte indicates that the first device has the first capability, where N and M are integers, 1 ≤ N ≤ 8, and 1 ≤ M ≤ 8.

A specific implementation in which the value of any one or more bits included in the first byte indicates that the first device has the first capability, the value of any one or more bits included in the second byte indicates that the first device has the first capability, and the value of the combination of any N bits included in the first byte and any M bits included in the second byte indicates that the first device has the first capability is not limited. With reference to Table 3, the following uses an example for description. A value of a combination of one bit (denoted as a bit 1) in the first byte and one bit (denoted as a bit 2) in the second byte indicates that the first device has the first capability.

**Table 3**

| (bit 1, bit 2) | Extended NCI Control Frame | Extended NCI Data Frame | Whether a first device has a first capability |
|---|---|---|---|
| 00 | Not support | Not support | Not have |
| 01 | Not support | Support | Have |
| 10 | Support | Not support | Have |
| 11 | Support | Support | Have |

In Table 3, that the first device supports the extended NCI control frame or the extended NCI data frame may be understood as that the first device supports generation, transmission, and parsing of an NCI control frame or an NCI data frame whose payload field has a length greater than 255 bytes. In this case, a length of a payload length field (that is, the second field) of the extended NCI control frame or the extended NCI data frame may be greater than 1 byte. That the first device does not support the extended NCI control frame or the extended NCI data frame may be understood as that the first device supports generation, transmission, and parsing of an NCI control frame or an NCI data frame whose payload field has a length of 255 bytes. In this case, the length of the payload length field (that is, the second field) of the NCI control frame or the NCI data frame is equal to 1 byte. It should be understood that, in Table 3, an example in which a value of a bit included in the first byte indicates whether the first device supports the extended NCI control frame and a value of a bit included in the second byte indicates whether the first device supports the extended NCI data frame is used for description, and does not constitute any limitation on using the first byte and the second byte to indicate whether the first device has the first capability. For example, a value of any bit in the first byte or the second byte may alternatively indicate that the first device supports both the extended NCI control frame and the extended NCI data frame. For another example, a value of one bit included in the first byte may indicate that the first device supports the extended NCI control frame extension, and a value of another bit included in the first byte may indicate that the first device supports the extended NCI data frame. It should be understood that the value of any one or more bits included in the second byte indicates a specific implementation in which the first device has the first capability, and is similar to the specific implementation in which the value of any one or more bits included in the first byte indicates that the first device has the first capability.

Optionally, in some implementations, the second field is a feature enable Feature Enable field. For example, the Feature Enable field may be, but is not limited to, a Feature Enable field included in an NCI core initialization command message CORE_INIT_CMD defined in the NCI protocol version 2.1. In this case, the first message may be the CORE_INIT_CMD message.

Optionally, in some implementations, the second message includes a third field, and the third field includes a fourth byte having three reserved bits, a fifth byte having two reserved bits, a sixth byte having four reserved bits, and a seventh byte having eight reserved bits. Any one or more bits in any one of the following bytes, or any plurality of bits in any plurality of the following bytes indicate that the second device has the second capability: a fourth byte, a fifth byte, a sixth byte, or a seventh byte. Positions of the three reserved bits included in the fourth byte in the fourth byte, positions of the two reserved bits included in the fifth byte in the fifth byte, and positions of the four reserved bits included in the sixth byte in the sixth byte are not specifically limited. For example, the Feature Enable field is defined in the NCI protocol version 2.1. The three reserved bits included in the fourth byte may be located in the highest three bits of the fourth byte, the two reserved bits included in the fifth byte may be respectively located in the highest bit and the lowest bit of the fifth byte, and the four reserved bits included in the sixth byte may be located in the highest four bits of the sixth byte. For example, a value of any one or more bits of the fourth byte may indicate that the second device has the second capability. For example, a value of one reserved bit of the fourth byte is equal to "0", it indicates that the second device has the second capability. For another example, a value of two reserved bits of the fourth byte is equal to "11", it indicates that the second device has the second capability. Optionally, the fourth byte may alternatively be replaced with any one of the fifth byte, the sixth byte, or the seventh byte. For example, a value of three reserved bits, that is, one reserved bit (denoted as a reserved bit #1) in the fifth byte, one reserved bit (denoted as a reserved bit #2) in the sixth byte, and one reserved bit (denoted as a reserved bit #3) in the seventh byte, indicates that the second device has the second capability. Specifically, a value of the reserved bit #1 and the reserved bit #2 may indicate whether the second device supports the NCI control frame whose payload field has a length of L bytes (L is a positive integer), and a value of the reserved bit #3 indicates whether the second device supports the NCI data frame whose payload field has a length of L bytes (L is a positive integer). For example, when L is a positive integer greater than 1, and a value of (the reserved bit #1, the reserved bit #2, the reserved bit #3) is equal to (0, 0, 1), it indicates that the second device has the second capability, and the second device does not support the NCI control frame whose payload length field has a length of L bytes, but supports the NCI data frame whose payload length field has a length of L bytes.

Optionally, in some implementations, the third field is a near field communication control feature NFCC Feature field. For example, the NFCC Feature field may be, but is not limited to, an NFCC Feature field included in an NCI core initialization response message CORE_INIT_RSP defined in the NCI protocol version 2.1. In this case, the second message may be a CORE_INIT_RSP message.

This embodiment of this application provides three manners (namely, Manner 1, Manner 2, and Manner 3). Based on any one of the three manners, the first device may obtain, based on the received message (including the second message, the third message, and the sixth message) sent by the second device, specific content of the second capability of the second device. The second capability of the second device includes, but is not limited to: The length of the maximum payload length field of the NCI frame supported by the second device is L bytes, where L is a positive integer. When L is a positive integer greater than 1, the second device has the second capability, it indicates that the second device has the NCI frame whose maximum length is greater than 255 bytes (that is, the NCI control frame or the NCI data frame) that supports generation, transmission, and parsing of the payload field. The following describes the three manners in detail.

Manner 1: The length of the maximum payload length field of the NCI frame supported by the second device carried in the second message is L bytes, where L is a positive integer.

In Manner 1, the first message may be CORE_INIT_CMD, and the second message may be CORE_INIT_RSP. In this implementation, the target NCI frame is an NCI control frame, the second message may include a maximum payload length field of a control frame having a first length, the first length is L bytes, and a length of the second field is not greater than L bytes. Optionally, the target NCI frame is an NCI data frame, the second message includes a maximum payload length field of a static host controller interface HCI pipe data frame having a second length, the second length is L bytes, and a length of the second field is not greater than L bytes. It may be understood that, in the foregoing Manner 1, the NCI frame supported by the second device may be an NCI control frame, or may be an NCI data frame.

For interaction steps of the method described in the foregoing Manner 1, refer to FIG. 4. As shown in FIG. 4, in step 410, the first device sends the first message to the second device, where the first message indicates that the first device has the first capability; and in step 420, the first device receives the second message sent by the second device, where the second message indicates that the second device has the second capability, the second message includes the maximum payload length field of the control frame having the first length, the first length is L bytes, or the second message includes the maximum payload length field of the data frame having the second length, the second length is L bytes, and the length of the second field is not greater than L. Optionally, before step 410, the method may further include a step in which the first device establishes the NFC communication with the second device, and an interaction procedure of the step of establishing NFC communication is not specifically limited. For example, before step 410 in this embodiment of this application, the first device and the second device may alternatively perform a procedure of establishing the NFC communication in an existing method.

Manner 2: The length of the maximum payload length field of the NCI data frame supported by the second device carried in the third message is L bytes, where L is a positive integer.

In Manner 2, after the first device receives the second message sent by the second device, the first device is further configured to perform the following operation: The first device receives the third message sent by the second device. The third message includes a fourth field. The fourth field indicates that the length of the maximum payload length field of the NCI data frame supported by the second device is L bytes, and the length of the second field is not greater than L bytes. A length of the fourth field is not specifically limited, as long as it is ensured that the length of the second field is not greater than L bytes. In this implementation, after the first device sends the first message to the second device and receives the second message sent by the second device, the first device may learn that the second device has the second capability, and the second device may learn that the first device has the first capability. Further, the first device may learn, based on the received third message sent by the second device, the length of the maximum payload length field of the NCI data frame supported by the second device. In this implementation, the first message may be CORE_INIT_CMD, and the second message may be CORE_INIT_RSP. Optionally, before the first device receives the third message sent by the second device, the first device may further send a command message to the second device. The command message may be an RF discovery command message RF_DISCOVER_CMD (used for the second device to enter a sniffing or listening mode) or an NCI core pipe creation command message CORE_CONN_CREATE_CMD (used for the second device to create a communication pipe).

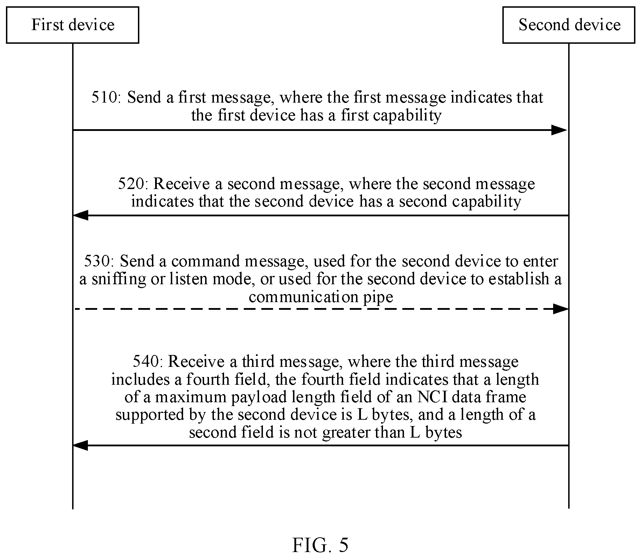

For interaction steps of the method described in the foregoing Manner 2, refer to FIG. 5. As shown in FIG. 5, in step 510, the first device sends the first message to the second device, where the first message indicates that the first device has the first capability. In step 520, the first device receives the second message sent by the second device, where the second message indicates that the second device has the second capability. In step 530, the first device sends the command message to the second device, where the command message is used for the second device to enter a sniffing or listening mode, or the command message is used for the second device to create a communication pipe. In step 540, the first device receives the third message sent by the second device. Optionally, before step 510, the method may further include a step in which the first device establishes the NFC communication with the second device, and an interaction procedure of the step of establishing NFC communication is not specifically limited. For example, before step 510 in this embodiment of this application, a procedure of establishing the NFC communication in an existing method may alternatively be performed.

In the foregoing Manner 2, the fourth field indicates that the length of the maximum payload length field of the NCI data frame supported by the second device is L bytes, where L is a positive integer. In some implementations, the fourth field specifically indicates that the length of the maximum payload length field of the static RF pipe data frame supported by the second device is L bytes. In this case, the third message (for example, the third message in step 540) may be a radio frequency RF interface activated message RF_INTF_ACTIVATED_NTF. The command message (for example, the command message in step 530) may be an RF discovery command message RF_DISCOVER_CMD, where the message is used for the second device to enter a sniffing or listening mode. In some other implementations, the fourth field specifically indicates that the length of the maximum payload length field of the dynamic pipe data frame supported by the second device is L bytes. In this case, the third message (for example, the third message in step 540) may be an NCI core pipe creation response message CORE_CONN_CREATE_RSP, and the command message (for example, the command message in step 530) may be the NCI core pipe creation command message CORE_CONN_CREATE_CMD, where the command message is used for the second device to create the communication pipe.

Manner 3: The length of the maximum payload length field of the NCI data frame supported by the second device carried in the sixth message is L bytes, where L is a positive integer.

In the foregoing Manner 3, that the length of the maximum payload length field of the NCI data frame supported by the second device carried in the sixth message is L bytes includes two specific implementations (that is, a specific implementation 1 and a specific implementation 2). The following separately describes the specific implementation 1 and the specific implementation 2.

### Specific implementation 1

In the specific implementation 1, the first device is further configured to perform the following operations: The first device sends a fifth message to the second device in response to receiving the second message. The fifth message includes a first tag identifier TAG ID, and the first TAG ID is used for requesting to obtain the length of the maximum payload length field of the NCI data frame supported by the second device, or the first TAG ID is used for requesting to obtain the length of the maximum payload length field of the NCI control frame supported by the second device. The first device receives a sixth message sent by the second device. The sixth message includes a first value, the first value indicates that the length of the maximum payload length field of the NCI data frame supported by the second device is the L bytes, or the first value indicates that the length of the maximum payload length field of the NCI control frame supported by the second device is the L bytes, and the length of the second field is not greater than the L bytes. It may be understood that when the first TAG ID is used for requesting to obtain the length of the maximum payload length field of the NCI data frame supported by the second device, the first value indicates that the length of the maximum payload length field of the NCI data frame supported by the second device is L bytes. When the first TAG ID is used for requesting to obtain the length of the maximum payload length field of the NCI control frame supported by the second device, the first value indicates that the length of the maximum payload length field of the NCI control frame supported by the second device is L bytes.

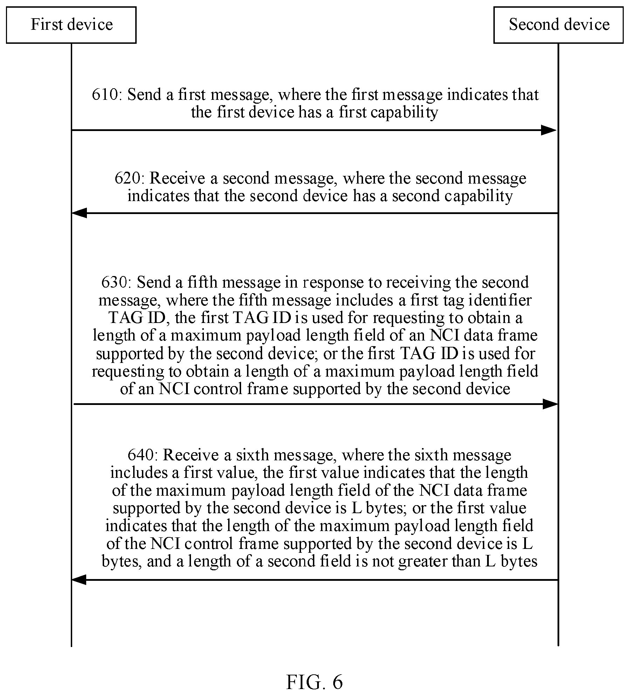

For interaction steps of the method described in the foregoing specific implementation 1, refer to FIG. 6. As shown in FIG. 6, in step 610, the first device sends the first message to the second device, where the first message indicates that the first device has the first capability. In step 620, the first device receives the second message from the second device, where the second message indicates that the second device has the second capability. In step 630, in response to receiving the second message, the first device sends the fifth message to the second device. In step 640, the first device receives the sixth message sent by the second device. Optionally, before step 610, the method may further include a step in which the first device establishes the NFC communication with the second device, and an interaction procedure of the step of establishing NFC communication is not specifically limited. For example, before step 610 in this embodiment of this application, a procedure of establishing the NFC communication in an existing method may alternatively be performed.

In the foregoing specific implementation 1, types of the fifth message and the sixth message are not specifically limited. In some implementations, the fifth message (for example, the fifth message in step 630) and the sixth message (for example, the sixth message in step 640) may be common messages defined in the NCI protocol. In some implementations, the fifth message may be CORE_GET_CONFIG_CMD, and the sixth message may be CORE_GET_CONFIG_RSP. In this case, a range of the first TAG ID may be 0x86 to 0x9F or 0xAO0 to 0xFE. In some other implementations, the fifth message (for example, the fifth message in step 630) and the sixth message (for example, the sixth message in step 640) may be vendor-defined messages, and the vendor-defined message may be understood as a private message (that is, a message that is not defined in the NCI protocol).

### Specific implementation 2

In the specific implementation 2, after the first device receives the second message sent by the second device, the first device is further configured to perform the following operations: In response to receiving the fourth message, the first device sends the fifth message to the second device. The fifth message includes a second TAG ID, and the second TAG ID is used for requesting to obtain the length of the maximum payload length field of the NCI data frame supported by the second device. The first device receives the sixth message sent by the second device. The sixth message includes a second value, the second value indicates that the length of the maximum payload length field of the NCI data frame supported by the second device is the L bytes, and the length of the second field is not greater than the L bytes. A value range of the second TAG ID is not specifically limited. For example, when the fifth message is CORE_GET_CONFIG_CMD, and the sixth message is CORE_GET_CONFIG_RSP, the range of the second TAG ID may be 0x86 to 0x9F or 0xA0 to 0xFE.

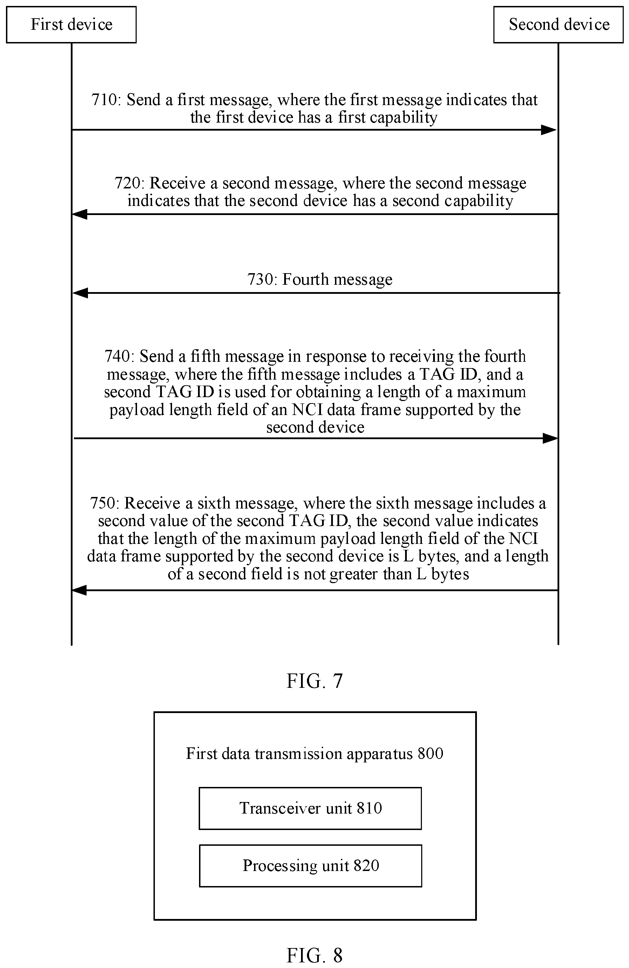

For interaction steps of the method described in the foregoing specific implementation 2, refer to FIG. 7. As shown in FIG. 7, in step 710, the first device sends the first message to the second device, where the first message indicates that the first device has the first capability. In step 720, the first device receives the second message from the second device, where the second message indicates that the second device has the second capability. In step 730, the first device receives the fourth message sent by the second device. In step 740, the first device sends the fifth message to the second device. In step 750, the first device receives the sixth message sent by the second device. It should be understood that the interaction steps of the method described in the foregoing specific implementation 2 shown in FIG. 7 are merely examples, and do not constitute any limitation. In some implementations, FIG. 7 may further include other steps than step 710 to step 750. For example, before step 710, the method may further include a step in which the first device establishes the NFC communication with the second device. An interaction procedure of the step of establishing the NFC communication is not specifically limited. For example, before step 710 in this embodiment of this application, the first device and the second device may alternatively perform a procedure of establishing the NFC communication in an existing method.

Based on the technical solution of the foregoing specific implementation 2, in an example, the sixth message and the fifth message may be common messages (also referred to as common commands) defined in the NCI specification, but the sixth message is not CORE_INIT_RSP, and the fifth message is not a sixth message or CORE_INIT_CMD. For ease of description, this implementation is denoted as an Example 1 below. In another example, the sixth message and the fifth message may be vendor-defined messages. The vendor-defined messages may be understood as private messages (that is, messages not defined in the NCI protocol). For ease of description, this implementation is denoted as an Example 2 below. The following describes Example 1 and Example 2 in detail.

Example 1: The sixth message and the fifth message may be common messages (also referred to as common commands) defined in the NCI specification, but the sixth message is not CORE_INIT_RSP, and the fifth message is not CORE_INIT_CMD.

Optionally, in some implementations, the fourth message (for example, the fourth message in step 730) is an RF interface activated notification message RF_INTF_ACTIVATED_NTF, and the first value specifically indicates that the length of the maximum payload length field of the static RF pipe data frame supported by the second device is L bytes. In this implementation, before the first device receives the fourth message sent by the second device, the first device may alternatively send, to the second device, RF_DISCOVER_CMD that enables the second device to enter a sniffing or listening mode.

Optionally, in some other implementations, the fourth message (for example, the fourth message in step 730) is a core pipe creation response message CORE_CONN_CREAT_RSP, the first TAG ID is specifically used for requesting to obtain the maximum payload length field of the dynamic pipe data frame supported by the second device, and the first value specifically indicates that the length of the maximum payload length field of the dynamic pipe data frame supported by the second device is L bytes. In this implementation, before the first device receives the fourth message sent by the second device, the first device may alternatively send, to the second device, CORE_CONN_CREAT_CMD used for the second device to create the communication pipe.

Example 2: The sixth message and the fifth message may be vendor-defined messages.

In this implementation, the fourth message is an RF interface activated notification message RF_INTF_ACTIVATED_NTF or a core pipe creation response message CORE_CONN_CREAT_RSP.

Optionally, in some implementations, the fifth message further includes a third TAG ID, and the third TAG ID is used for requesting to obtain the length of the maximum payload length field of the NCI control frame supported by the second device. The sixth message further includes a third value, and the third value indicates that the length of the maximum payload length field of the NCI control frame supported by the second device is L bytes.

It may be understood that, in the foregoing Manner 3, the first device uses a TAG ID to request to obtain the length of the maximum payload length field of the NCI data frame supported by the second device. Optionally, the first device may further request, based on another identifier included in the message, to obtain the length of the maximum payload length field of the NCI data frame supported by the second device.

Step 120: The first device sends the target NCI frame to the second device.

In step 120, the first device sends the target NCI frame to the second device, and correspondingly, the second device receives the target NCI frame sent by the first device. Then, the second device may further perform the following operations: The second device parses the target NCI frame to determine that the target NCI frame includes the frame header and the payload field. The frame header includes the first field and the second field, the first field indicates the quantity of bytes in the second field, and the second field indicates the length of the payload field. The second device obtains the valid payload from the payload field based on the second field. That the second device obtains the valid payload from the payload field based on the second field may be understood as that the second device determines, based on a specific length of the second field, an NCI protocol required based on which the payload field to be parsed, to obtain the valid payload carried in the payload field.

It should be understood that, in the foregoing method 100, the format of the NCI frame provided in this embodiment of this application is described by using the format of the NCI frame specified in the NCI protocol version 2.1 as an example, and the format of the NCI frame provided in this application is not limited. For example, the format of the NCI frame provided in this embodiment of this application may alternatively be described with reference to a format of an NCI frame specified in another NCI protocol version. The NCI frame (for example, the NCI control frame or the NCI data frame) obtained based on functions of the fields (for example, but not limited to, the first field, the second field, the third field, and the fourth field) described in the method 100 provided in this embodiment of this application falls within the protection scope of this embodiment of this application.

In this embodiment of this application, the first field of the target NCI frame indicates the quantity of bytes in the second field, and the second field indicates the length of the payload field. In this method, the length of the payload field of the target NCI frame can be flexibly adjusted. When the first field indicates that the quantity of bytes in the second field is greater than 1 byte, the maximum length of the payload field indicated by the second field is greater than 255 bytes, which helps reduce bandwidth overheads and improve transmission efficiency. For example, when the first device needs to send data information including 4096 bytes to the second device, based on the data transmission method provided in this embodiment of this application, the first device may set the first field in the frame header of a to-be-sent NCI frame to indicate that the quantity of bytes in the second field is 2 bytes, and indicate, through the quantity of bytes in the second field, that the maximum length of the payload field is 65535 bytes. Based on this, the payload field of the NCI frame may carry 4096 bytes of data information. Therefore, the first device needs to send only one NCI frame to the second device, and to-be-transmitted data information can be sent to the second device. In other words, when the first device uses the target NCI frame to transmit information of a large data volume (for example, a data volume of thousands of bytes), the method provided in this application also helps reduce bandwidth overheads and improve transmission efficiency.

With reference to FIG. 1 to FIG. 7, the data transmission method applicable to embodiments of this application is described in detail above. With reference to FIG. 8 to FIG. 11, a data transmission apparatus and system provided in embodiments of this application are described in detail below. It should be understood that descriptions of the apparatus and system embodiment correspond to descriptions of the method embodiment. Therefore, for content that is not described in detail, refer to the foregoing method embodiment. For brevity, details are not described herein again. FIG. 8 is a schematic diagram of a structure of a first data transmission apparatus 800 according to an embodiment of this application. The first data transmission apparatus 800 shown in FIG. 8 may perform corresponding steps performed by the first device in the foregoing method embodiment.

As shown in FIG. 8, the first data transmission apparatus 800 may include a transceiver unit 810 and a processing unit 820. The transceiver unit 810 may be configured to perform step 120 in the foregoing method 100 and step 410, step 420, step 510, step 520, step 530, step 540, step 610, step 620, step 630, step 640, step 710, step 720, step 730, step 740, and step 750 above. The processing unit 820 may be configured to perform step 110 in the method 100. For details of these steps, refer to the foregoing related steps. Details are not described herein again.

It should be understood that the apparatus 800 in this embodiment of this application may be implemented by a central processing unit (central processing unit, CPU), or may be implemented by an application-specific integrated circuit (application-specific integrated circuit, ASIC), or a programmable logic device (programmable logic device, PLD). The PLD may be a complex program logical device (complex programmable logical device, CPLD), a field programmable gate array (field-programmable gate array, FPGA), generic array logic (generic array logic, GAL), or any combination thereof. Alternatively, when the data transmission method shown in FIG. 1 to FIG. 7 may be implemented by using software, the apparatus 800 and modules thereof may be software modules.

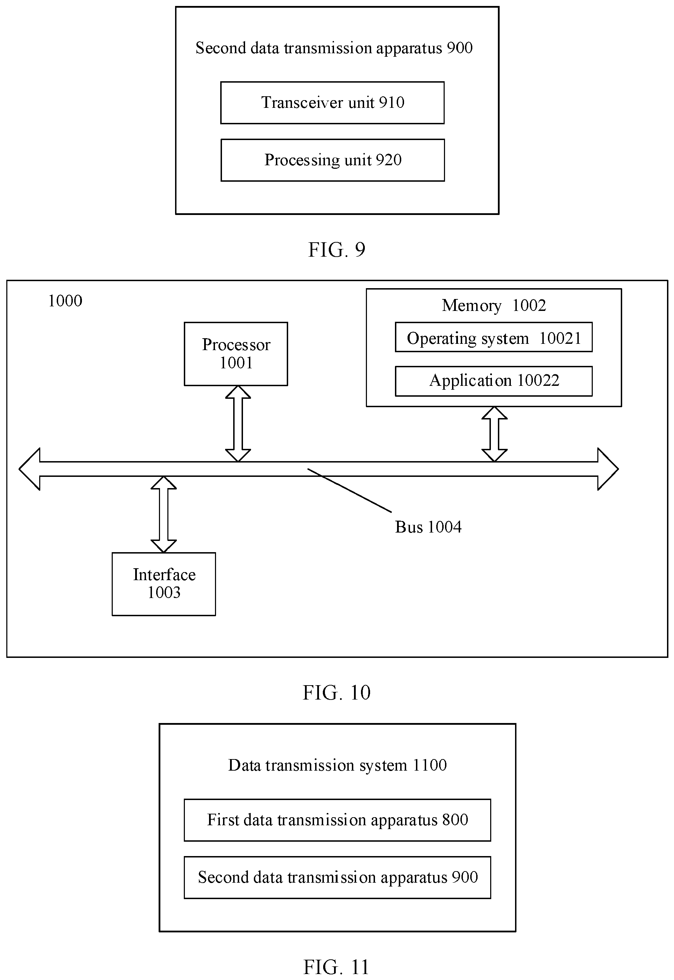

FIG. 9 is a schematic diagram of a structure of a data transmission apparatus 900 according to an embodiment of this application. The second data transmission apparatus 900 shown in FIG. 9 may perform corresponding steps performed by the second device in the foregoing method embodiment.

As shown in FIG. 9, the second data transmission apparatus 900 may include a transceiver unit 910 and a processing unit 920. The transceiver unit 910 may be configured to receive the target NCI frame in step 120, and is configured to perform step 410, step 420, step 510, step 520, step 530, step 540, step 610, step 620, step 630, step 640, step 710, step 720, step 730, step 740, and step 750 above. The processing unit 920 may be configured to parse the received target NCI frame, to obtain a valid payload carried in the target NCI frame. For details of these steps, refer to the foregoing related steps. Details are not described herein again.

It should be understood that the apparatus 900 in this embodiment of this application may be implemented by a central processing unit (central processing unit, CPU), or may be implemented by an application-specific integrated circuit (application-specific integrated circuit, ASIC), or a programmable logic device (programmable logic device, PLD). The PLD may be a complex program logical device (complex programmable logical device, CPLD), a field programmable gate array (field-programmable gate array, FPGA), generic array logic (generic array logic, GAL), or any combination thereof. Alternatively, when the data transmission method shown in FIG. 1 to FIG. 7 may be implemented by using software, the apparatus 900 and modules thereof may be software modules.

FIG. 10 is a schematic diagram of a hardware structure of a data transmission apparatus 2000 according to an embodiment of this application.

As shown in FIG. 10, the data transmission apparatus 1000 includes a processor 1001, a memory 1002, an interface 1003, and a bus 1004. The interface 1003 may be implemented in a wireless or wired manner, and may be specifically a network adapter. The processor 1001, the memory 1002, and the interface 1003 are connected by the bus 1004. The interface 1003 may specifically include a transmitter and a receiver, and is configured for the data transmission apparatus to implement the foregoing receiving and sending. The processor 1001 is configured to perform processing performed by the data transmission apparatus in the foregoing embodiment. The memory 1002 includes an operating system 10021 and an application program 10022, and is configured to store a program, code, or instructions. When executing the program, the code, or the instructions, the processor or a hardware device may complete a processing process related to BFIR in the method embodiment. Optionally, the memory 1002 may include a read-only memory (read-only memory, ROM) and a random access memory (random access memory, RAM). The ROM includes a basic input/output system (basic input/output system, BIOS) or an embedded system, and the RAM includes an application program and an operating system. When the data transmission apparatus 1000 needs to run, a bootloader in the BIOS or the embedded system that is built into the ROM is used to boot a system to start, and boot the data transmission apparatus 1000 to enter a normal running state. After the data transmission apparatus 1000 enters the normal running state, the application program and the operating system in the RAM are executed, to complete the processing process related to the data transmission apparatus 1000 in the method embodiment. FIG. 10 merely shows a simplified design of the data transmission apparatus 1000. In actual application, the data transmission apparatus may include any quantity of interfaces, processors, or memories.

Optionally, in some implementations, the data transmission apparatus 1000 may be a schematic diagram of a hardware structure of the first data transmission apparatus 800. In this case, the processor 1001 has a same function as the processing unit 810, and the interface 1003 has a same function as the transceiver unit 810.

Optionally, in other implementations, the data transmission apparatus 1000 may be a schematic diagram of a hardware structure of the second data transmission apparatus 900. In this case, the processor 1001 has a same function as the processing unit 910, and the interface 1003 has a same function as the transceiver unit 910.

FIG. 11 is a schematic diagram of a structure of a data transmission system 1100 according to an embodiment of this application. As shown in FIG. 11, the data transmission system 1100 may include the first data transmission apparatus 800 and the second data transmission apparatus 900.

An embodiment of this application further provides a computer-readable medium. The computer-readable medium stores program code. When the computer program code is run on a computer, the computer is enabled to perform the method performed by the first device or the second device in the foregoing method embodiment. The computer-readable storage includes, but is not limited to, one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip system. The chip system includes at least one processor, at least one memory, and an interface circuit. The interface circuit is responsible for information exchange between the chip system and an external device. The at least one memory, the interface circuit, and the at least one processor are interconnected by a line. The at least one memory stores instructions. The instructions are executed by the at least one processor, to perform operations related to the first device or the second device in the method according to the foregoing aspects. In a specific implementation process, the chip system may be implemented in a form of a central processing unit (central processing unit, CPU), a micro controller (micro controller unit, MCU), a micro processing unit (micro processing unit, MPU), a digital signal processor (digital signal processing, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product. The computer program product is applied to a first device, and the computer program product includes a series of instructions. When the instructions are run, operations of the first device in the method in the foregoing aspects are performed.

An embodiment of this application further provides a computer program product. The computer program product is applied to a second device, and the computer program product includes a series of instructions. When the instructions are run, operations of the second device in the method in the foregoing aspects are performed.

Terms such as "component", "module", and "system" used in this specification are used to represent computer-related entities, hardware, firmware, combinations of hardware and software, software, or software being executed. For example, a component may be, but is not limited to, a process run on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate through a local and/or remote process and based on, for example, a signal having one or more data packets (for example, data from two components interacting with another component in a local system, a distributed system, and/or across a network such as the Internet interacting with other systems through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A data transmission method (100), comprising:
generating (110), by a first device, a target near field communication control interface NCI frame, wherein the target NCI frame comprises a frame header and a payload field, the frame header comprises a first field and a second field, the first field indicates a quantity of bytes in the second field, and the second field indicates a length of the payload field; and
sending (120), by the first device, the target NCI frame to the second device.

2. The method according to claim 1, wherein
the first field comprises Q reserved bits, and a value of any one or more of the Q reserved bits indicates a length of the second field, wherein Q is a positive integer.

3. The method according to claim 2, wherein Q is equal to 2, and the target NCI frame is an NCI control frame; and
the Q reserved bits are a b0 bit and a b1 bit in the 2^{nd} byte in the frame header.

4. The method according to claim 2, wherein Q is equal to 6, and the target NCI frame is an NCI data frame; and
the Q reserved bits are the following bits in the 2^{nd} byte in the frame header: a b0 bit, a b1 bit, a b2 bit, a b3 bit, a b4 bit, and a b5 bit.

5. The method according to any one of claims 1 to 4, wherein before the generating (110), by a first device, a target near field communication control interface NCI frame, the method further comprises:
sending (410), by the first device, a first message to the second device, wherein the first message indicates that the first device has a first capability, and the first capability represents that a length of a maximum payload length field of an NCI frame supported by the first device is P bytes, wherein P is a positive integer; and
receiving (420), by the first device, a second message sent by the second device, wherein the second message indicates that the second device has a second capability, and the second capability represents that a length of a maximum payload length field of an NCI frame supported by the second device is L bytes, wherein L is a positive integer, and L is greater than or equal to P; and
the generating (110), by a first device, a target near field communication control interface NCI frame comprises:
generating, by the first device, the target NCI frame based on the first capability.

6. The method according to claim 5, wherein the first message comprises a second field, and the second field comprises a first byte used as a reserved byte and a second byte used as a reserved byte, wherein
a value of any one or more bits comprised in the first byte indicates that the first device has the first capability; or
a value of any one or more bits comprised in the second byte indicates that the first device has the first capability; or
a value of a combination of any N bits comprised in the first byte and any M bits comprised in the second byte indicates that the first device has the first capability, N and M are integers, 1 ≤ N ≤ 8 , and 1 ≤ M ≤ 8 .

7. The method according to claim 6, wherein the second field is a feature enable Feature Enable field.

8. The method according to any one of claims 5 to 7, wherein the second message comprises a third field, and the third field comprises a fourth byte having three reserved bits, a fifth byte having two reserved bits, a sixth byte having four reserved bits, and a seventh byte having eight reserved bits; and
a value of any one or more bits in any one of the following bytes, or a value of any plurality of bits in any plurality of the following bytes indicates that the second device has the second capability: the fourth byte, the fifth byte, the sixth byte, or the seventh byte.

9. The method according to claim 8, wherein the third field is a near field communication control feature NFCC Feature field.

10. The method according to any one of claims 5 to 9, wherein the target NCI frame is an NCI control frame; and the second message comprises a maximum payload length field of a control frame having a first length, the first length is the L bytes, and a length of the second field is not greater than the L bytes.

11. A data transmission method, comprising:
receiving, by a second device, a target near field communication control interface NCI frame sent by a first device;
parsing, by the second device, the target NCI frame, to determine that the target NCI frame comprises a frame header and a payload field, wherein the frame header comprises a first field and a second field, the first field indicates a quantity of bytes in the second field, and the second field indicates a length of the payload field; and
obtaining, by the second device, a valid payload from the payload field based on the second field.

12. The method according to claim 11, wherein before the receiving, by a second device, a target near field communication control interface NCI frame sent by a first device, the method further comprises:
receiving, by the second device, a first message sent by the first device, wherein the first message indicates that the first device has a first capability, the first capability represents that a maximum payload length field of an NCI frame supported by the first device is P bytes, wherein P is a positive integer; and
sending, by the second device, a second message to the first device, wherein the second message indicates that the second device has a second capability, and the second capability represents that a length of a maximum payload length field of an NCI frame supported by the second device is L bytes, wherein L is a positive integer, and L is greater than or equal to P.

13. A first data transmission apparatus (1000), wherein the first data transmission apparatus (1000) comprises at least one processor (1001) and a communication interface (1003), and the at least one processor (1001) is configured to execute a computer program or instructions, so that the first data transmission apparatus (1000) performs the method according to any one of claims 1 to 10.

14. A second data transmission apparatus (1000), wherein the second data transmission apparatus (1000) comprises at least one processor (1001) and a communication interface (1003), and the at least one processor (1001) is configured to execute a computer program or instructions, so that the second data transmission apparatus (1000) performs the method according to claim 11 or 12.

15. A data transmission system, comprising the first data transmission apparatus according to claim 13 and the second data transmission apparatus according to claim 14.

## Patentansprüche

1. Datenübertragungsverfahren (100), umfassend:
Erzeugen (110), durch ein erstes Gerät, eines Ziel-Nahfeldkommunikationssteuerschnittstellen(NCI)-Frames, wobei der Ziel-NCI-Frame eine Frame-Kopfzeile und ein Nutzdatenfeld umfasst, wobei die Frame-Kopfzeile ein erstes Feld und ein zweites Feld umfasst, wobei das erste Feld eine Anzahl von Bytes in dem zweiten Feld anzeigt und das zweite Feld eine Länge des Nutzdatenfelds anzeigt; und
Senden (120), durch das erste Gerät, des Ziel-NCI-Frames an das zweite Gerät.

2. Verfahren nach Anspruch 1, wobei
das erste Feld Q reservierte Bits umfasst und ein Wert eines oder mehrerer beliebiger der Q reservierten Bits eine Länge des zweiten Felds anzeigt, wobei Q eine positive Ganzzahl ist.

3. Verfahren nach Anspruch 2, wobei Q gleich 2 ist und der Ziel-NCI-Frame ein NCI-Steuerframe ist; und
wobei die Q reservierten Bits ein b0-Bit und ein b1-Bit in dem 2. Byte in der Frame-Kopfzeile sind.

4. Verfahren nach Anspruch 2, wobei Q gleich 6 ist und der Ziel-NCI-Frame ein NCI-Datenframe ist; und
wobei die Q reservierten Bits die folgenden Bits in dem 2. Byte in der Frame-Kopfzeile sind: ein b0-Bit, ein b1-Bit, ein b2-Bit, ein b3-Bit, ein b4-Bit und ein b5-Bit.

5. Verfahren nach einem der Ansprüche 1 bis 4, wobei vor dem Erzeugen (110), durch ein erstes Gerät, eines Ziel-Nahfeldkommunikationssteuerschnittstellen(NCI)-Frames, das Verfahren ferner Folgendes umfasst:
Senden (410), durch das erste Gerät, einer ersten Nachricht an das zweite Gerät, wobei die erste Nachricht anzeigt, dass das erste Gerät eine erste Fähigkeit aufweist, und die erste Fähigkeit darstellt, dass eine Länge eines Felds einer maximalen Nutzdatenlänge eines NCI-Frames, der durch das erste Gerät unterstützt wird, P Bytes ist, wobei P eine positive Ganzzahl ist; und
Empfangen (420), durch das erste Gerät, einer zweiten Nachricht, die durch das zweite Gerät gesendet wird, wobei die zweite Nachricht anzeigt, dass das zweite Gerät eine zweite Fähigkeit aufweist, und die zweite Fähigkeit darstellt, dass eine Länge eines Felds einer maximalen Nutzdatenlänge eines NCI-Frames, der durch das zweite Gerät unterstützt wird, L Bytes ist, wobei L eine positive Ganzzahl ist und L größer als oder gleich P ist; und
wobei das Erzeugen (110), durch ein erstes Gerät, eines Ziel-Nahfeldkommunikationssteuerschnittstellen-NCI-Frames Folgendes umfasst:
Erzeugen, durch das erste Gerät, des Ziel-NCI-Frames basierend auf der ersten Fähigkeit.

6. Verfahren nach Anspruch 5, wobei die erste Nachricht ein zweites Feld umfasst und das zweite Feld ein erstes Byte, das als ein reserviertes Byte verwendet wird, und ein zweites Byte, das als ein reserviertes Byte verwendet wird, umfasst, wobei
ein Wert eines oder mehrerer beliebiger Bits, die in dem ersten Byte enthalten sind, anzeigt, dass das erste Gerät die erste Fähigkeit aufweist; oder
ein Wert eines oder mehrerer beliebiger Bits, die in dem zweiten Byte enthalten sind, anzeigt, dass das erste Gerät die erste Fähigkeit aufweist; oder
ein Wert einer Kombination aus beliebigen N Bits, die in dem ersten Byte enthalten sind, und beliebigen M Bits, die in dem zweiten Byte enthalten sind, anzeigt, dass das erste Gerät die erste Fähigkeit aufweist, wobei N und M Ganzzahlen sind, wobei 1≤N≤8 und 1≤M≤8.

7. Verfahren nach Anspruch 6, wobei das zweite Feld ein Merkmalsaktivierungs-Feld bzw. "Feature Enable"-Feld ist.

8. Verfahren nach einem der Ansprüche 5 bis 7, wobei die zweite Nachricht ein drittes Feld umfasst und das dritte Feld ein viertes Byte mit drei reservierten Bits, ein fünftes Byte mit zwei reservierten Bits, ein sechstes Byte mit vier reservierten Bits und ein siebtes Byte mit acht reservierten Bits umfasst; und
wobei ein Wert eines oder mehrerer beliebiger Bits in einem beliebigen der folgenden Bytes oder ein Wert einer beliebigen Mehrzahl von Bits in einer beliebigen Mehrzahl der folgenden Bytes anzeigt, dass das zweite Gerät die zweite Fähigkeit aufweist: dem vierten Byte, dem fünften Byte, dem sechsten Byte oder dem siebten Byte.

9. Verfahren nach Anspruch 8, wobei das dritte Feld ein Nahfeldkommunikationssteuermerkmals(NFCC)-, Feature"-Feld ist.

10. Verfahren nach einem der Ansprüche 5 bis 9, wobei der Ziel-NCI-Frame ein NCI-Steuerframe ist; und
wobei die zweite Nachricht ein Feld einer maximalen Nutzdatenlänge eines Steuerframes mit einer ersten Länge umfasst, wobei die erste Länge die L Bytes ist und eine Länge des zweiten Felds nicht größer als die L Bytes ist.

11. Datenübertragungsverfahren, umfassend:
Empfangen, durch ein zweites Gerät, eines Ziel-Nahfeldkommunikationssteuerschnittstellen(NCI)-Frames, der durch ein erstes Gerät gesendet wird;
Analysieren, durch das zweite Gerät, des Ziel-NCI-Frames, um zu bestimmen, dass der Ziel-NCI-Frame eine Frame-Kopfzeile und ein Nutzdatenfeld umfasst, wobei die Frame-Kopfzeile ein erstes Feld und ein zweites Feld umfasst, wobei das erste Feld eine Anzahl von Bytes in dem zweiten Feld anzeigt und das zweite Feld eine Länge des Nutzdatenfelds anzeigt; und
Erhalten, durch das zweite Gerät, von gültigen Nutzdaten aus dem Nutzdatenfeld basierend auf dem zweiten Feld.

12. Verfahren nach Anspruch 11, wobei vor dem Empfangen, durch ein zweites Gerät, eines Ziel-Nahfeldkommunikationssteuerschnittstellen(NCI)-Frames, der durch ein erstes Gerät gesendet wird, das Verfahren ferner Folgendes umfasst:
Empfangen, durch das zweite Gerät, einer ersten Nachricht, die durch das erste Gerät gesendet wird, wobei die erste Nachricht anzeigt, dass das erste Gerät eine erste Fähigkeit aufweist, wobei die erste Fähigkeit darstellt, dass ein Feld einer maximalen Nutzdatenlänge eines NCI-Frames, der durch das erste Gerät unterstützt wird, P Bytes ist, wobei P eine positive Ganzzahl ist; und
Senden, durch das zweite Gerät, einer zweiten Nachricht an das erste Gerät, wobei die zweite Nachricht anzeigt, dass das zweite Gerät eine zweite Fähigkeit aufweist, und die zweite Fähigkeit darstellt, dass eine Länge eines Felds einer maximalen Nutzdatenlänge eines NCI-Frames, der durch das zweite Gerät unterstützt wird, L Bytes ist, wobei L eine positive Ganzzahl ist und L größer als oder gleich P ist.

13. Erste Datenübertragungsvorrichtung (1000), wobei die erste Datenübertragungsvorrichtung (1000) mindestens einen Prozessor (1001) und eine Kommunikationsschnittstelle (1003) umfasst und der mindestens eine Prozessor (1001) dazu konfiguriert ist, ein Computerprogramm oder Anweisungen auszuführen, so dass die erste Datenübertragungsvorrichtung (1000) das Verfahren nach einem der Ansprüche 1 bis 10 durchführt.

14. Zweite Datenübertragungsvorrichtung (1000), wobei die zweite Datenübertragungsvorrichtung (1000) mindestens einen Prozessor (1001) und eine Kommunikationsschnittstelle (1003) umfasst und der mindestens eine Prozessor (1001) dazu konfiguriert ist, ein Computerprogramm oder Anweisungen auszuführen, so dass die zweite Datenübertragungsvorrichtung (1000) das Verfahren nach einem der Ansprüche 11 oder 12 durchführt.

15. Datenübertragungssystem, das die erste Datenübertragungsvorrichtung nach Anspruch 13 und die zweite Datenübertragungsvorrichtung nach Anspruch 14 umfasst.

## Revendications

1. Procédé de transmission de données (100), comprenant :
la génération (110), par un premier dispositif, d'une trame d'interface de commande de communication en champ proche, NCI, cible, dans lequel la trame NCI cible comprend un en-tête de trame et un champ de charge utile, l'en-tête de trame comprend un premier champ et un deuxième champ, le premier champ indique une quantité d'octets dans le deuxième champ, et le deuxième champ indique une longueur du champ de charge utile ; et
l'envoi (120), par le premier dispositif, de la trame NCI cible au second dispositif.

2. Procédé selon la revendication 1, dans lequel
le premier champ comprend Q bits réservés, et une valeur d'un ou plusieurs bits quelconques des Q bits réservés indique une longueur du deuxième champ, Q étant un nombre entier positif.

3. Procédé selon la revendication 2, dans lequel Q est égal à 2, et la trame NCI cible est une trame de commande NCI ; et
les Q bits réservés sont un bit b0 et un bit b1 dans le deuxième octet de l'en-tête de trame.

4. Procédé selon la revendication 2, dans lequel Q est égal à 6, et la trame NCI cible est une trame de données NCI ; et
les Q bits réservés sont les bits suivants dans le deuxième octet de l'en-tête de trame : un bit b0, un bit b1, un bit b2, un bit b3, un bit b4, et un bit b5.

5. Procédé selon l'une quelconque des revendications 1 à 4, dans lequel avant la génération (110), par un premier dispositif, d'une trame d'interface de commande de communication en champ proche, NCI, cible, le procédé comprend en outre :
l'envoi (410), par le premier dispositif, d'un premier message au second dispositif, dans lequel le premier message indique que le premier dispositif a une première capacité, et la première capacité représente le fait qu'une longueur d'un champ de longueur de charge utile maximale d'une trame NCI prise en charge par le premier dispositif est de P octets, où P est un nombre entier positif ; et
la réception (420), par le premier dispositif, d'un second message envoyé par le second dispositif, dans lequel le second message indique que le second dispositif a une seconde capacité, et la seconde capacité représente le fait qu'une longueur d'un champ de longueur de charge utile maximale d'une trame NCI prise en charge par le second dispositif est de L octets, où L est un nombre entier positif, et L est supérieur ou égal à P ; et
la génération (110), par un premier dispositif, d'une trame d'interface de commande de communication en champ proche, NCI, cible comprend :
la génération, par le premier dispositif, de la trame NCI cible sur la base de la première capacité.

6. Procédé selon la revendication 5, dans lequel le premier message comprend un deuxième champ, et le deuxième champ comprend un premier octet utilisé comme octet réservé et un deuxième octet utilisé comme octet réservé, dans lequel
une valeur d'un ou plusieurs bits quelconques compris dans le premier octet indique que le premier dispositif a la première capacité ; ou
une valeur d'un ou plusieurs bits quelconques compris dans le deuxième octet indique que le premier dispositif a la première capacité ; ou
une valeur d'une combinaison de N bits quelconques compris dans le premier octet et de M bits quelconques compris dans le deuxième octet indique que le premier dispositif a la première capacité, N et M sont des nombres entiers, 1 ≤ N ≤ 8, et 1 ≤ M ≤ 8.

7. Procédé selon la revendication 6, dans lequel le deuxième champ est un champ d'activation de fonction, Feature Enable.

8. Procédé selon l'une quelconque des revendications 5 à 7, dans lequel le second message comprend un troisième champ, et le troisième champ comprend un quatrième octet ayant trois bits réservés, un cinquième octet ayant deux bits réservés, un sixième octet ayant quatre bits réservés, et un septième octet ayant huit bits réservés ; et
une valeur d'un ou plusieurs bits quelconques dans l'un quelconque des octets suivants, ou une valeur d'une pluralité quelconque de bits dans une pluralité quelconque des octets suivants, indique que le second dispositif a la seconde capacité : le quatrième octet, le cinquième octet, le sixième octet, ou le septième octet.

9. Procédé selon la revendication 8, dans lequel le troisième champ est un champ de fonction de commande de communication en champ proche, NFCC Feature.

10. Procédé selon l'une quelconque des revendications 5 à 9, dans lequel la trame NCI cible est une trame de commande NCI ; et
le second message comprend un champ de longueur de charge utile maximale d'une trame de commande ayant une première longueur, la première longueur est les L octets, et une longueur du deuxième champ n'est pas supérieure aux L octets.

11. Procédé de transmission de données, comprenant :
la réception, par un second dispositif, d'une trame d'interface de commande de communication en champ proche, NCI, cible envoyée par un premier dispositif ;
l'analyse, par le second dispositif, de la trame NCI cible, pour déterminer que la trame NCI cible comprend un en-tête de trame et un champ de charge utile, dans lequel l'en-tête de trame comprend un premier champ et un deuxième champ, le premier champ indique une quantité d'octets dans le deuxième champ, et le deuxième champ indique une longueur du champ de charge utile ; et
l'obtention, par le second dispositif, d'une charge utile valide à partir du champ de charge utile sur la base du deuxième champ.

12. Procédé selon la revendication 11, dans lequel, avant la réception, par un second dispositif, d'une trame d'interface de commande de communication en champ proche, NCI, cible envoyée par un premier dispositif, le procédé comprend en outre :
la réception, par le second dispositif, d'un premier message envoyé par le premier dispositif, dans lequel le premier message indique que le premier dispositif a une première capacité, la première capacité représente le fait qu'un champ de longueur de charge utile maximale d'une trame NCI prise en charge par le premier dispositif est de P octets, où P est un nombre entier positif ; et
l'envoi, par le second dispositif, d'un second message au premier dispositif, dans lequel le second message indique que le second dispositif a une seconde capacité, et la seconde capacité représente le fait qu'une longueur d'un champ de longueur de charge utile maximale d'une trame NCI prise en charge par le second dispositif est de L octets, où L est un nombre entier positif, et L est supérieur ou égal à P.

13. Premier appareil de transmission de données (1000), dans lequel le premier appareil de transmission de données (1000) comprend au moins un processeur (1001) et une interface de communication (1003), et l'au moins un processeur (1001) est configuré pour exécuter un programme informatique ou des instructions, de sorte que le premier appareil de transmission de données (1000) effectue le procédé selon l'une quelconque des revendications 1 à 10.

14. Second appareil de transmission de données (1000), dans lequel le second appareil de transmission de données (1000) comprend au moins un processeur (1001) et une interface de communication (1003), et l'au moins un processeur (1001) est configuré pour exécuter un programme informatique ou des instructions, de sorte que le second appareil de transmission de données (1000) effectue le procédé selon la revendication 11 ou 12.

15. Système de transmission de données comprenant le premier appareil de transmission de données selon la revendication 13 et le second appareil de transmission de données selon la revendication 14.
